# DEMANDE DE BREVET EUROPEEN

(11) **EP 4 525 349 A1**
(43) Date de publication de la demande: **19.03.2025**
(21) Numéro de dépôt: 24200576.7
(22) Date de dépôt: 16.09.2024
(51) Int. Cl.: H04L 9/08, H04L 9/16, H04L 9/30, H04L 9/40

(54) **PROCÉDÉ HYBRIDE D'ÉCHANGE DE CLÉS ROBUSTE AUX ATTAQUES QUANTIQUES**

(30) Priorité: 18.09.2023 FR 2309843
(71) Demandeur: THALES, 92190 Meudon (FR)
(72) Inventeur: AUGE, Eric, 49309 CHOLET (FR); LEMOINE, Dorian, 49309 CHOLET (FR)
(74) Mandataire: Atout PI Laplace

(57) **Abrégé**

L'invention porte sur un procédé d'obtention d'une clé secrète hybride comprenant :
- une première étape (201) d'obtention d'une première clé secrète, en utilisant une technologie robuste aux attaques quantiques,
- une deuxième étape (202) d'obtention d'une deuxième clé secrète dans un espace chiffré par la première clé secrète, en utilisant une technologie autre que celle utilisée dans la première étape (201), la clé secrète hybride correspondant à la deuxième clé secrète.

Elle porte également sur un procédé d'échange de données sécurisé, un système, un produit programme d'ordinateur et un support d'enregistrement utilisant la clé secrète hybride.

## Description

### Domaine technique :

L'invention se situe dans le domaine technique de la cybersécurité, et porte plus précisément sur un procédé d'obtention de clés symétriques, ou clés secrètes, par hybridation de technologies permettant la résistance aux attaques par calculs quantiques. De telles clés peuvent être utilisées, entre autres, pour la mise en place de tunnels VPN (sigle anglais pour *Virtual Private Network,* ou réseau privé virtuel) entre deux équipements.

### Technique antérieure :

Les tunnels VPN permettent d'établir des connexions sécurisées entre deux équipements sur un canal de communications non sécurisé. Les données échangées sur le tunnel VPN sont chiffrées de bout en bout par une clé de chiffrement, ce qui les rend impossibles à interpréter pour tout observateur ne disposant pas de cette clé.

Il existe deux types de chiffrement : le chiffrement symétrique et le chiffrement asymétrique.

Le chiffrement symétrique, ou chiffrement à clé secrète, utilise une même clé pour chiffrer et déchiffrer les données. Ce type de chiffrement est rapide, utilise peu de ressources et est particulièrement performant. Cependant, il requiert le partage préalable et sécurisé de la clé secrète entre les équipements impliqués dans la transmission.

Le chiffrement asymétrique utilise une clé publique pour chiffrer les données, et une clé privée pour les déchiffrer. Les deux clés sont liées. La clé publique peut être transmise sans précaution particulière : l'émetteur l'utilise pour chiffrer les données, qui ne pourront être déchiffrées qu'à l'aide de la clé privée. Il n'est donc pas nécessaire de procéder à un échange sécurisé de clé préalable à la transmission. Cependant, le chiffrement asymétrique est plus complexe, et donc lent et coûteux, que le chiffrement symétrique.

Ainsi, les tunnels VPN entre deux équipements comprennent généralement deux phases :
- une première phase d'obtention d'une clé secrète, durant laquelle une clé secrète est établie entre les deux équipements par un échange cryptographique asymétrique basé sur une clé publique/clé privée fournie par une PKI (sigle anglais pour *Public Key Infrastructure,* ou infrastructure à clé publique) avec authentification, par exemple IKEv2 (sigle anglais pour *Internet Key Exchange version 2,* ou échange de clés internet) pour IPsec (acronyme anglais pour *Internet Protocol security,* ou sécurité du protocole internet). C'est le principe de Diffie-Hellman ;
- une deuxième phase d'échange de données, durant laquelle les paquets transmis sur le tunnel VPN sont chiffrés/déchiffrés en utilisant la clé symétrique négociée lors de la première phase, par exemple avec un algorithme AES (acronyme anglais pour *Advanced Encryption Standard,* ou standard de chiffrement avancé).

Par la suite, on parle d'obtention d'une clé secrète pour indiquer que deux entités homologues s'accordent, via des échanges, des injections ou une phase de négociation, sur une clé commune.

Aujourd'hui, les méthodes de chiffrement de l'art antérieur sont sures puisqu'une puissance de calcul dépassant largement les capacités de calcul des calculateurs actuels serait nécessaire pour les casser. Cependant, l'informatique quantique vient changer la donne puisqu'on estime que d'ici peu, les ordinateurs quantiques utilisant des algorithmes comme celui de Shor pourront casser les échanges asymétriques basés sur la fonction mathématique d'exponentiation. La sécurité de la cryptographie à clé publique/clé privée actuellement déployée pour l'établissement de tunnels VPN pourrait donc s'effondrer puisqu'il serait possible pour un attaquant d'intercepter la clé secrète établie lors de la phase d'obtention de la clé secrète, ce qui compromettrait l'ensemble des données transmises sur le tunnel VPN par la suite.

A l'inverse, les algorithmes de chiffrement/déchiffrement symétrique sont considérés comme résistants aux attaques réalisées par des ordinateurs quantiques, puisqu'il est possible d'augmenter la taille de la clé secrète en proportion de l'augmentation de la puissance de calcul des ordinateurs quantiques.

Plusieurs solutions permettent d'établir un tunnel VPN en distribuant de manière sécurisée les clés secrètes de chiffrement symétrique des données.

La première de ces solutions, la plus simple, repose sur la distribution de clés secrètes par « *trusted courier »* (courrier sécurisé). Il s'agit d'acheminer les clés secrètes auprès des différents équipements par un moyen tiers et sécurisé, par exemple par courrier papier. Le problème est que les clés de chiffrement symétriques doivent être renouvelées régulièrement. En effet, on considère qu'elles « s'usent », c'est-à-dire qu'elles ne peuvent chiffrer qu'un nombre limité de données sans donner d'informations à un éventuel attaquant. Le renouvellement de clés secrètes par « *trusted courier »* est complexe à mettre en oeuvre, c'est pourquoi un grand nombre de clés sont généralement acheminées conjointement et sont utilisées successivement au gré de leur renouvellement. Cela nécessite une capacité de stockage sécurisé des clés secrètes non utilisées, pose un problème de vulnérabilité des clés dans le temps et requiert une forte planification. Une solution variante consiste à livrer de façon sécurisée un équipement préchargé avec un lot de clés initiales suffisantes pour couvrir sa durée de vie opérationnelle. Cette solution est possible si peu de clés sont nécessaires et nécessite beaucoup d'attention au transport et au stockage des équipements.

Une autre solution est basée sur le PHYSEC/SKG (acronyme anglais pour *PHYsical layer SECurity* / *Secret Key Génération,* ou sécurité physique / génération de clé secrète). Cette solution consiste à utiliser les caractéristiques du canal radio de transmission et une phase de réconciliation pour négocier des clés secrètes. Le principe de cette solution se base sur l'exploitation de l'aléa physique induit par la propagation et le bruit de réception pour générer des clés secrètes ou appliquer des codages correcteurs secrets. Cette solution apporte néanmoins une preuve quantifiable de sécurité limitée.

D'autres solutions, dites post-quantiques (ou PQC, acronyme anglais pour *Post-Quantum Cryptography*)*,* ont été présentées dans une campagne du NIST (acronyme anglais pour *National Institute of Standards* & *Technology,* ou institut national des standards et technologies). Ces solutions sont des algorithmes de signature (comme Falcon) et des mécanismes d'encapsulation de clé (KEM, acronyme anglais pour Key Encapsulation Mechanism). Cependant, le niveau de maturité des algorithmes post-quantiques ne doit pas être surestimé. En effet, ces techniques manquent de maturité à plusieurs niveaux :
- au niveau du dimensionnement : la taille des données et parfois la capacité de traitement est augmentée (la taille des clés nécessaires à l'échange des clés peut être jusqu'à 16.000 fois plus importante que la taille de la clé finale),
- au niveau de l'intégration des algorithmes dans des protocoles de communications,
- au niveau de la conception d'implémentations sécurisées (les procédés sont récents, avec un certain manque de recul).

En outre, plusieurs schémas post-quantiques ont souffert d'attaques « classiques » au cours des dernières années.

Une autre solution consiste à échanger des clés secrètes par QKD (sigle anglais pour *Quantum Key Distribution,* ou distribution de clé quantique). La distribution de clé QKD repose sur des échanges de photons réalisés sur un canal optique (espace libre ou fibre optique), et sur des échanges dits de « réconciliation » réalisés sur un canal de protocole distinct, afin d'associer les photons émis et reçus avec une clé secrète. Ces techniques font appel aux propriétés physiques des phénomènes quantiques plutôt qu'aux mathématiques pour déterminer des clés.

Le problème de cette solution est qu'il s'agit là aussi d'une technologie récente. Les clés ne sont pas faciles à obtenir, et se font sur des distances et avec des débits limités. La limitation de distance requiert l'insertion de « *trusted nodes »,* ou noeuds de confiance, pour le routage de proche en proche des clés secrètes. Le niveau de protection des noeuds de confiance doit être en adéquation avec le niveau de classification des clés générées.

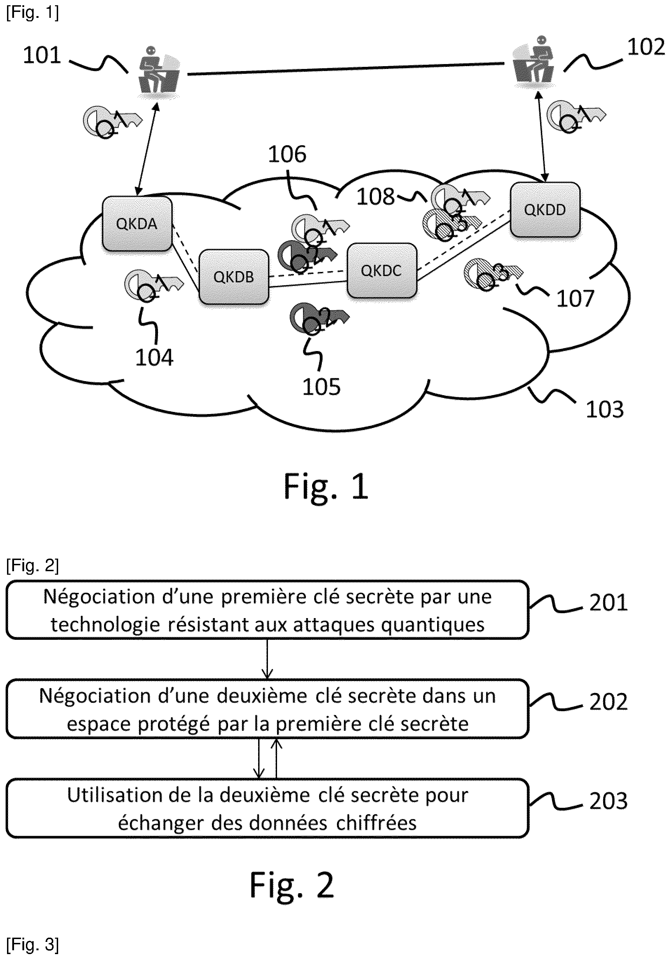

La figure 1 représente les mécanismes devant être mis en oeuvre pour un échange de clé par QKD entre un chiffreur 101 et un chiffreur 102 dont l'éloignement est tel qu'ils ne peuvent procéder directement à l'échange de clé par QKD. Il est alors nécessaire de mettre en oeuvre un réseau de noeuds QKD 103 comprenant un ou plusieurs noeuds de confiance QKDA à QKDD. Dans l'exemple de la figure 1, le noeud de confiance QKDA est relié au chiffreur 101 par une liaison sécurisée, et le noeud de confiance QKDD est relié au chiffreur 102 par une autre liaison sécurisée. Cet échange se fait en plusieurs étapes :
- une première étape durant laquelle le noeud QKDA et le noeud QKDB négocient une clé secrète Q1 104 par un mécanisme quantique,
- une deuxième étape durant laquelle le noeud QKDB et le noeud QKDC négocient une clé Q2 secrète 105 par un mécanisme quantique,
- une troisième étape durant laquelle le noeud QKDB protège (chiffre) la clé secrète Q1 en utilisant la clé secrète Q2, et transmet la clé Q1 protégée 106 au noeud QKDC,
- une quatrième étape durant laquelle le noeud QKDC et le noeud QKDD négocient une clé Q3 secrète 107 par un mécanisme quantique,
- une cinquième étape durant laquelle le noeud QKDC protège la clé secrète Q1 en utilisant la clé secrète Q3, et transmettent la clé Q1 protégée 108 au noeud QKDD,
- une sixième étape durant laquelle le noeud QKDA distribue la clé secrète Q1 au chiffreur 101, et le noeud QKDD distribue la clé secrète Q1 au chiffreur 102.

Les chiffreurs 101 et 102 peuvent alors échanger des données chiffrées par la clé secrète Q1.

Cette solution implique donc la mise en oeuvre d'une infrastructure de communications 103 spécifiquement dédiée à la génération de la clé secrète, pouvant impliquer de nombreux noeuds QKD. En outre, cette solution consomme de nombreuses clés QKD pour le transport d'une seule clé secrète, ce qui est coûteux.

Afin de limiter les défauts de robustesse des algorithmes post-quantiques, une solution connue et recommandée consiste à générer une clé secrète hybride à partir de plusieurs clés issues de technologies de génération de clé distinctes via une technique dite de KDF (sigle anglais pour *Key Derivation Fonction,* ou fonction de dérivation de clé). On peut par exemple dériver une clé secrète à partir d'une clé QKD, d'une clé post-quantique et d'une clé obtenue par un échange asymétrique ou introduire une clé d'une technologie résistante aux attaques quantiques dans le procédé classique de Diffie-Helman. Cette solution nécessite l'obtention de plusieurs clés dans des technologies hétérogènes pour la génération de chaque clé secrète, dont la durée de vie est limitée. Elle est donc très consommatrice de ressources.

Il n'existe donc pas actuellement de solution permettant d'obtenir une clé secrète de manière simple et robuste aux attaques par ordinateurs quantiques. Un des objets de l'invention est donc de répondre à cette problématique par un procédé s'appuyant sur l'hybridation de solutions de sécurité, plutôt qu'en combinant des clés obtenues par des solutions de sécurité distinctes. On entend par hybridation la mise en synergie et en coopération de deux techniques d'obtention de clés secrètes.

### Résumé de l'invention :

A cet effet, la présente invention décrit un procédé d'obtention d'une clé secrète hybride comprenant :
- une première étape d'obtention d'une première clé secrète, en utilisant une technologie robuste aux attaques quantiques,
- une deuxième étape d'obtention d'une deuxième clé secrète dans un espace chiffré par la première clé secrète, en utilisant une technologie autre que celle utilisée dans la première étape,
la clé secrète hybride correspondant à la deuxième clé secrète.

Avantageusement, le renouvellement de la clé secrète se fait en exécutant de nouveau la deuxième étape seulement.

Selon différents modes de réalisation, la technologie robuste aux attaques quantiques utilisée lors de la première étape est choisie parmi un ensemble de technologies d'échange de clés secrètes comprenant :
- une distribution de clé par courrier sécurisé,
- un échange de clé par PHYSec,
- un échange de clé par une méthode post-quantique,
- une injection de clé quantique QKD.

Selon différents modes de réalisation, la technologie d'échange de clés secrètes utilisée lors de la deuxième étape est choisie parmi un ensemble de technologies d'échange de clés secrètes comprenant :
- une technologie d'obtention de clé secrète établie par un échange cryptographique asymétrique,
- un échange de clé PHYSec.

L'invention porte également sur un procédé d'échange de données sécurisé entre deux équipements comprenant :
- l'obtention d'une clé secrète hybride par un procédé d'obtention d'une clé secrète hybride selon l'invention,
- une étape de mise en oeuvre d'un tunnel VPN chiffré entre les deux équipements pour l'échange de données sécurisé, ledit tunnel VPN étant chiffré avec ladite clé secrète hybride.

Avantageusement, une pluralité de clés secrètes hybrides sont générées en itérant la deuxième étape du procédé d'obtention d'une clé secrète hybride pour mettre en oeuvre respectivement une pluralité de tunnels VPN chiffrés.

L'invention porte également sur un système comprenant deux équipements reliés par une liaison de données, lesdits équipements comprenant des moyens configurés pour mettre en oeuvre ensemble un procédé d'échange de données sécurisé selon l'invention.

L'invention porte également sur un produit programme d'ordinateur comprenant des instructions de code de programme, permettant à deux moyens de calcul numériques de mettre en oeuvre ensemble un procédé d'obtention d'une clé secrète hybride ou un procédé d'échange de données sécurisé selon l'invention, et sur un support d'enregistrement lisible par un ordinateur sur lequel est enregistré le produit programme d'ordinateur.

### Brève description des figures :

L'invention sera mieux comprise et d'autres caractéristiques, détails et avantages apparaîtront mieux à la lecture de la description qui suit, donnée à titre non limitatif, et grâce aux figures annexées, données à titre d'exemple.
[Fig. 1] La figure 1 représente les mécanismes mis en oeuvre pour un échange de clé secrète par QKD selon l'état de l'art entre deux équipements distants.
[Fig. 2] La figure 2 un diagramme synoptique d'un procédé d'obtention d'une clé secrète hybride selon un mode de réalisation de l'invention.
[Fig. 3] La figure 3 illustre les étapes d'un procédé d'obtention d'une clé secrète hybride selon un mode de réalisation de l'invention.
[Fig. 4] La figure 4 représente un mode de réalisation d'un procédé d'échange de données sécurisé entre deux équipements selon l'invention.
[Fig. 5] La figure 5 représente un mode de réalisation d'un procédé d'échange de données sécurisé entre deux équipements selon l'invention.
[Fig. 6] La figure 6 représente un mode de réalisation d'un procédé d'échange de données sécurisé entre deux équipements selon l'invention.
[Fig. 7] La figure 7 représente un mode de réalisation d'un procédé d'échange de données sécurisé entre deux équipements selon l'invention.
[Fig. 8] La figure 8 représente un mode de réalisation d'un procédé d'échange de données sécurisé entre deux équipements selon l'invention.

### Description détaillée :

L'invention décrite par la suite porte sur un procédé d'obtention d'une clé secrète hybride, utilisable pour le chiffrement symétrique de données dans une transmission opérée par un tunnel VPN, selon un mécanisme robuste aux attaques quantiques. Le procédé s'applique dans le cas de la construction d'un tunnel VPN, mais également de manière plus générale pour n'importe quelle utilisation mettant en oeuvre une clé secrète.

La figure 2 est un diagramme synoptique d'un procédé de génération d'une clé secrète selon un mode de réalisation de l'invention.

Le procédé comprend une première étape 201 d'obtention d'une première clé secrète, en utilisant une technologie robuste aux attaques quantiques. Comme indiqué précédemment, il existe plusieurs technologies robustes aux attaques quantiques pour obtenir une clé secrète, comprenant l'injection de clés par QKD, le résultat d'un échange de clé par un algorithme cryptographique post-quantique (PQC), par PHYSEC ou par distribution « *trusted courier ».* Cette étape peut être mise en oeuvre en utilisant n'importe quel type de technologie robuste aux attaques quantiques.

Le procédé comprend ensuite une deuxième étape 202 d'obtention d'une deuxième clé secrète dans un espace protégé chiffré par la première clé secrète.. Cette étape s'effectue avec une autre technologie que celle utilisée dans la première étape. Il n'existe pas de contrainte sur la technologie utilisée lors de la deuxième étape pour l'obtention de la deuxième clé secrète, qui sera donc plutôt choisie parmi les technologies peu consommatrices en temps et en puissance de calculs, comme par exemple un échange de clé asymétrique classique (Diffie-Helman) ou un échange de clé par PHYSec. On entend par « espace chiffré » un espace dans lequel les échanges de données sont protégés par un chiffrement symétrique systématique utilisant la première clé secrète.

La deuxième clé générée est donc une clé hybride obtenue sous couvert de deux technologies d'injection, de distribution ou/et d'échange de clés. Cette hybridation permet de protéger l'obtention de la clé hybride dans un espace protégé par une clé robuste aux attaques quantiques. L'hybridation proposée permet d'être robuste aux attaques classiques et aux attaques quantiques. Ainsi en cas de défaillance d'une des deux technologies, le procédé global reste robuste à au moins un des deux types d'attaques. La clé hybride obtenue offre un niveau de sécurité équivalent aux clés hybrides obtenues par dérivation KDF d'une clé secrète depuis des clés secrètes obtenues par des technologies différentes, tout en étant beaucoup moins couteuse à implémenter. Cette clé hybride peut être utilisée pour la mise en oeuvre un tunnel VPN 203 robuste aux attaques réalisées par des ordinateurs quantiques.

Le renouvellement de la clé secrète utilisée pour chiffrer le tunnel VPN 203 se fait en réitérant l'étape 202 du procédé, sans qu'il ne soit nécessaire (jusqu'à un certain point) de renouveler la première clé secrète.

La première étape 201 du procédé peut sembler complexe et/ou coûteuse à mettre en oeuvre, mais au final, cette complexité et ce coût sont limités car la première clé secrète générée s'use très lentement. Son besoin de renouvellement est faible, et elle peut servir à la génération d'une multitude de deuxièmes clés secrètes. Le procédé fait donc très peu appel à l'étape 201.

La clé secrète hybride, utilisée pour chiffrer le trafic dans le tunnel VPN, s'use plus rapidement et son besoin de renouvellement est plus fort, c'est pourquoi elle peut avantageusement (mais non nécessairement) être mise en oeuvre par une technologie peu consommatrice en temps et en puissance de calcul, tel qu'un échange asymétrique de clés classique Diffie-Helman ou PHYsec.

Une technologie d'échange de clé secrète mise en oeuvre selon l'invention entre deux équipements est un protocole mettant en oeuvre (de manière sécurisée) des échanges (par exemple de type négociation) entre deux équipements leur permettant d'établir de manière commune et sécurisée, une clé secrète.

Comme stipulé plus haut, on entend par « espace chiffré » un espace dans lequel les échanges de données mis en oeuvre par le déroulement de la deuxième technologie d'échange de clés sont EN OUTRE protégés par un chiffrement symétrique systématique utilisant la première clé secrète.

Ainsi, lorsque la deuxième étape d'obtention de clé secrète est déroulée, la technologie d'échange de clé secrète (304) autre que celle utilisée dans la première étape est déroulée pour générer une clé secrète de manière sécurisée et commune mais en outre, en ajoutant aux échanges classiques mis en oeuvre pour ce faire, un chiffrement supplémentaire de ces échanges par la première clé secrète (on remarque donc que si on effectuait cette deuxième étape sans mettre en oeuvre de chiffrement, il y aurait quand même génération de clé secrète commune selon un protocole de génération de clé secrète). L'effet de l'invention est d'obtenir, comme stipulé dans la revendication 1, une clé hybride, i.e. une clé telle qu'en cas de défaillance d'une des deux technologies, le procédé reste robuste.

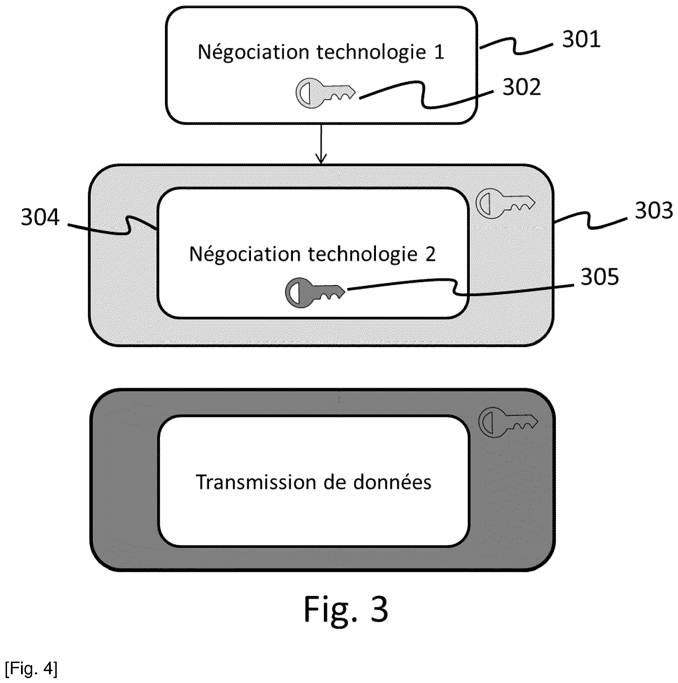

La figure 3 illustre les étapes d'un procédé de génération d'une clé secrète selon un mode de réalisation de l'invention. La première étape 201 consiste à obtenir une première clé secrète 302 en utilisant une technologie 301 robuste aux attaques quantiques.

Cette clé 302 est utilisée pour créer un espace chiffré 303 sous couvert duquel une deuxième clé secrète 305 est négociée, en utilisant une technologie 304 différente de la technologie 301.

L'échange de données sécurisé se fait à travers un tunnel VPN 306 chiffré par la deuxième clé secrète, ou clé hybride, 305.

Le procédé de génération de clé secrète selon l'invention présente de nombreux avantages :
- il permet la mise en oeuvre de transmissions chiffrées robustes aux attaques réalisées par des ordinateurs classiques et/ou des ordinateurs quantiques ;
- il permet la mise en oeuvre d'un tunnel VPN avec une consommation réduite de clés. En effet, une seule clé chiffrée obtenue par une technologie robuste aux attaques quantiques (la première clé) est nécessaire pour l'acheminement d'une très grande quantité de données sécurisées. Contrairement à la génération de clés secrètes par QKD telle qu'illustrée à la figure 1 ou à la génération de clés par KDF, il n'est pas nécessaire, pour chaque clé secrète, de négocier plusieurs clés dont le transport peut être long et coûteux. On peut parler d'écoconception ;
- les clés secrètes peuvent être générées à la demande. Le système de transmission mettant en oeuvre le procédé selon l'invention est donc souple et dynamique ;
- il est simple à mettre en oeuvre, puisqu'il s'agit d'encapsuler des systèmes de chiffrement connus dans un espace protégé par une clé symétrique obtenue par un mécanisme robuste aux attaques quantiques ;
- il est adapté à toutes les technologies de chiffrement existantes.

La consommation réduite de clés pour la mise en oeuvre d'un tunnel VPN basé sur un procédé de génération de clé secrète selon l'invention peut être illustrée en prenant l'exemple d'un chiffreur configuré pour chiffrer un flux de données avec une clé secrète avec un débit de 10 Mbits/seconde. De manière arbitraire, nous considérons que la clé symétrique doit être renouvelée toutes les 4 heures, soit toutes les 180 milliards d'octets chiffrés.

Dans un système robuste aux attaques quantiques selon l'art antérieur, comme un système d'échange de clé par QKD, il serait nécessaire de procéder à une négociation de clé quantique telle qu'illustré à la figure 1 toutes les quatre heures.

Un échange de clé asymétrique (IKEv2) nécessite environ 20 ko à chaque renouvellement. Un tunnel VPN mis en oeuvre en utilisant un procédé de génération de clé secrète selon l'invention nécessite la génération d'une clé robuste aux attaques quantiques (première clé 302) pour chiffrer plus de 9 millions de clés secrètes (deuxième clé 305). Le recours aux technologies robustes aux attaques quantiques, coûteux et long, est donc particulièrement réduit en utilisant le procédé d'obtention de clé selon l'invention, sans que la robustesse du chiffrement n'en soit diminuée.

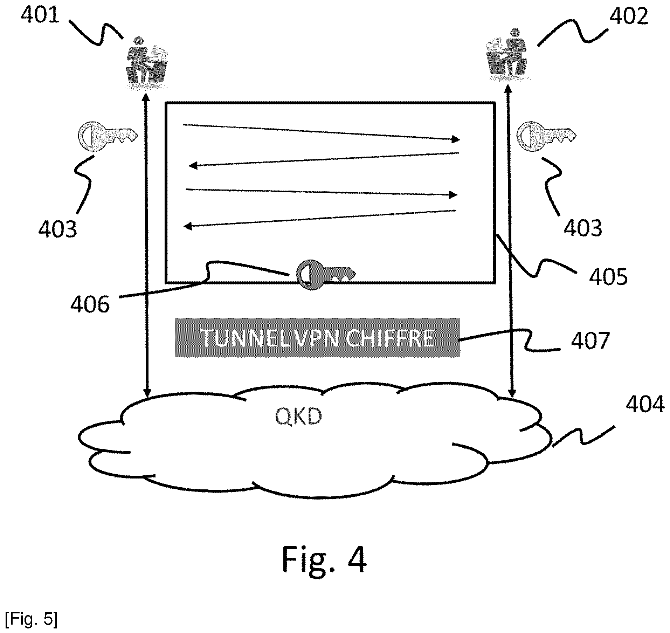

Les figures 4 à 7 illustrent différents modes de réalisation d'un procédé d'échange de données sécurisé selon l'invention.

Dans la figure 4, des équipements 401 et 402 obtiennent une première clé secrète 403 par un mécanisme robuste aux attaques quantiques à travers un réseau d'échange de clés QKD 404 tel qu'illustré à la figure 1.

La première clé secrète 403 est utilisée pour mettre en place un espace chiffré 405 dans lequel les équipements 401 et 402 obtiennent une deuxième clé secrète 406 en utilisant une technologie d'échange de clé asymétrique (IKEv2 par exemple).

Un tunnel VPN 407 chiffré avec la deuxième clé secrète 406 est ensuite mis en oeuvre pour l'échange de données sécurisé entre l'équipement 401 et l'équipement 402.

Le renouvellement de la deuxième clé secrète 406 se fait dans l'espace 401 chiffré par la première clé secrète 403, jusqu'à usure de cette clé.

A noter que l'espace 405 chiffré par la première clé secrète peut être utilisé pour obtenir plusieurs deuxièmes clés secrètes respectivement destinées à la mise en oeuvre de plusieurs tunnels VPN.

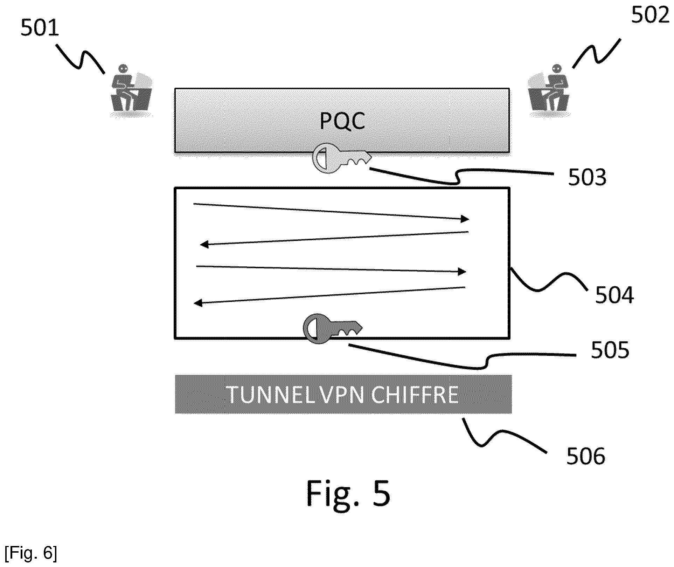

Dans la figure 5, des équipements 501 et 502 obtiennent une première clé secrète 503 par un mécanisme robuste aux attaques quantiques en utilisant une technologie d'échange de clé post-quantique (PQC).

La première clé secrète 503 est utilisée pour mettre en place un espace chiffré 504 dans lequel les équipements 501 et 502 obtiennent une deuxième clé secrète 505 en utilisant une technologie d'obtention de clé secrète établie par un échange cryptographique asymétrique (IKEv2 par exemple).

Un tunnel VPN 506 chiffré avec la deuxième clé secrète 505 est ensuite mis en oeuvre pour l'échange de données sécurisé entre l'équipement 501 et l'équipement 502.

Le renouvellement de la deuxième clé secrète 505 se fait dans l'espace 504 chiffré par la première clé secrète 503, jusqu'à usure de cette clé.

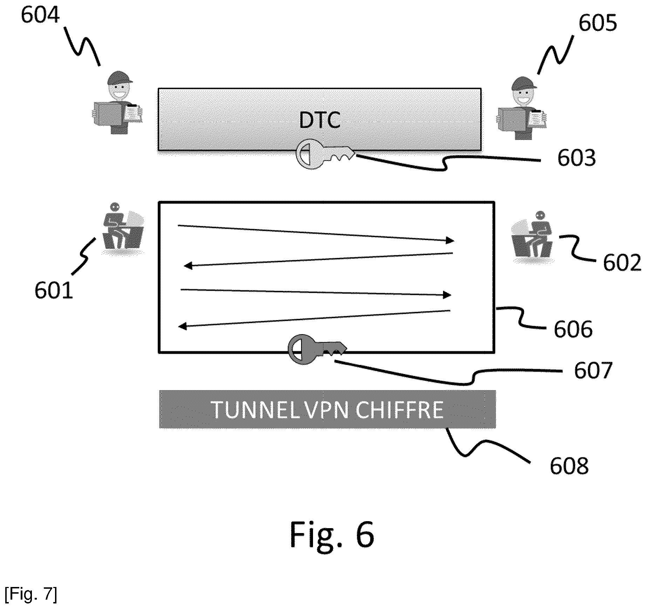

Dans la figure 6, des équipements 601 et 602 obtiennent une première clé secrète 603 par un mécanisme robuste aux attaques quantiques en faisant appel à un « *trusted courier »* de confiance 604 et 605 injectant la clé 603 aux deux équipements. Le courrier de confiance peut par exemple être un DTC (sigle anglais pour *Depository Trust Company,* ou entreprise de confiance dépositaire), un transport par valise diplomatique, ou toute autre méthode garantissant la sécurité des clés lors de leur acheminement et de leur injection.

La première clé secrète 603 est utilisée pour mettre en place un espace chiffré 606 dans lequel les équipements 601 et 602 obtiennent une deuxième clé secrète 607 en utilisant une technologie d'obtention de clé secrète établie par un échange cryptographique asymétrique (IKEv2 par exemple).

Un tunnel VPN 608 chiffré avec la deuxième clé secrète 607 est ensuite mis en oeuvre pour l'échange de données sécurisé entre l'équipement 601 et l'équipement 602.

Le renouvellement de la deuxième clé secrète 607 se fait dans l'espace 606 chiffré par la première clé secrète 603, jusqu'à usure de cette clé.

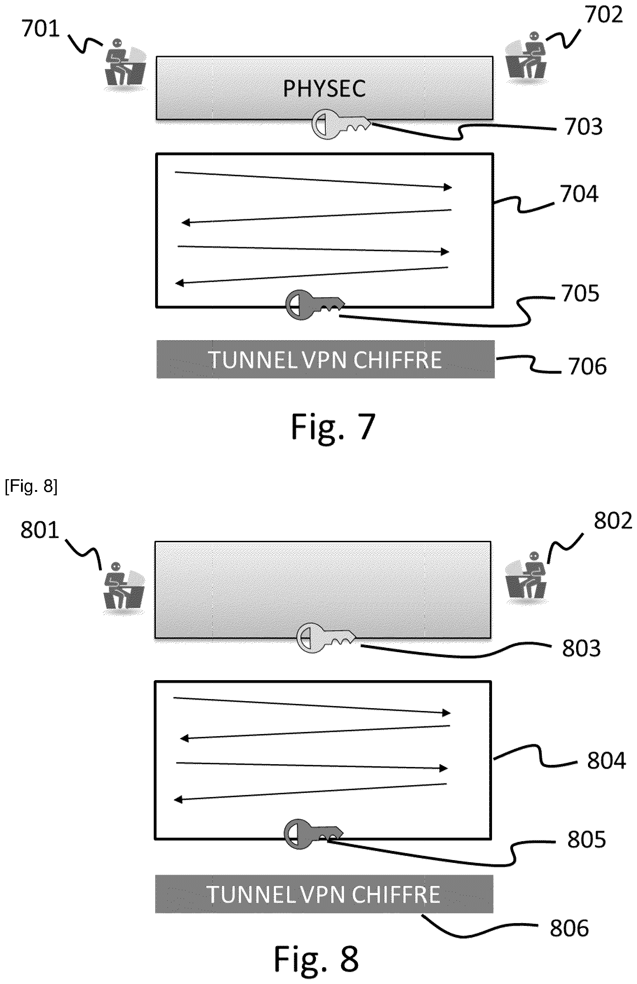

Dans la figure 7, des équipements 701 et 702 obtiennent une première clé secrète 703 par un mécanisme robuste aux attaques quantiques en utilisant une technologie de type PHYSEC.

La première clé secrète 703 est utilisée pour mettre en place un espace chiffré 704 dans lequel les équipements 701 et 702 obtiennent une deuxième clé secrète 705 en utilisant une technologie d'obtention de clé secrète établie par un échange cryptographique asymétrique (IKEv2 par exemple).

Un tunnel VPN 706 chiffré avec la deuxième clé secrète 705 est ensuite mis en oeuvre pour l'échange de données sécurisé entre l'équipement 701 et l'équipement 702.

Le renouvellement de la deuxième clé secrète 705 se fait dans l'espace 704 chiffré par la première clé secrète 703, jusqu'à usure de cette clé.

Dans la figure 8, des équipements 801 et 802 obtiennent une première clé secrète 803 par un mécanisme robuste aux attaques quantiques en utilisant n'importe quelle technologie robuste aux attaques quantiques.

La première clé secrète 803 est utilisée pour mettre en place un espace chiffré 804 dans lequel les équipements 801 et 802 obtiennent une deuxième clé secrète 805 en utilisant une technologie de type PHYSEC.

Un tunnel VPN 806 chiffré avec la deuxième clé secrète 805 est ensuite mis en oeuvre pour l'échange de données sécurisé entre l'équipement 801 et l'équipement 802.

Le renouvellement de la deuxième clé secrète 805 se fait dans l'espace 804 chiffré par la première clé secrète 803, jusqu'à usure de cette clé.

A noter que dans ce cas, les deux technologies employées sont robustes aux attaques quantiques. La première technologie permet de renforcer la sécurité de la seconde.

L'invention présentée ici porte sur :
- une méthode permettant d'obtenir des clés secrètes hybrides, comprenant l'hybridation de deux technologies de génération de clés afin de protéger l'échange de clé réalisé selon une technologie dans un espace utilisant une clé secrète obtenue par une autre technologie robuste aux attaques quantiques, et
- une méthode d'échange de données entre deux équipements, comprenant l'établissement d'un tunnel VPN chiffré à l'aide d'une clé secrète obtenue par un procédé selon l'invention hybridant deux technologies de génération de clés dont au moins la première est robuste aux attaques quantiques.

L'invention porte également sur un système comprenant deux équipements configurés pour mettre en oeuvre ensemble un procédé d'obtention de clés secrètes hybrides selon l'invention et/ou un procédé d'échange de données selon l'invention.

Ces équipements comprennent des moyens de calculs numériques, tels que par exemple un microprocesseur, un DSP (sigle anglais pour *Digital Signal Processor,* ou processeur de signal numérique), un FPGA (sigle anglais pour *Field Programmable Gate Array,* ou réseau de portes programmable), un ASIC (acronyme anglais pour *Application-Specific Integrated Circuit,* ou circuit intégré propre à une application), ou n'importe quelle association de ces moyens, configurés pour mettre en oeuvre le chiffrement et pour réaliser les injections/échanges/négociations de clés nécessaires à la mise en oeuvre de l'invention. Le cas échéant, les équipements peuvent comprendre ou être reliés à des moyens spécifiques afin d'implémenter une technologie d'échange de clés donnée. Par exemple, lorsque la technologie robuste aux attaques quantiques repose sur une distribution de clés quantiques (QKD), ces moyens peuvent comprendre un dispositif d'émission/réception d'un signal transmis sur un canal optique et sur un canal secondaire (optique ou non), pour l'échange de photons et la réconciliation du signal optique. Lorsque la technologie robuste aux attaques quantiques repose sur un « *trusted courier »,* les moyens peuvent comprendre une interface de chargement de clés secrètes. Lorsque la technologie repose sur le PHYSec, ils peuvent comprendre des moyens d'estimation d'un canal de propagation.

L'invention porte également sur un produit programme d'ordinateur comprenant des instructions de code de programme lisibles par un moyen de calcul numérique (microprocesseur, DSP, FPGA, ...), permettant à deux moyens de calcul numériques d'exécuter ensemble un procédé d'obtention d'une clé secrète hybride ou un procédé d'échange de données sécurisé selon un mode de réalisation de l'invention. Enfin, l'invention porte sur un support d'enregistrement lisible par un ordinateur, comprenant le produit programme d'ordinateur.

## Revendications

1. Procédé d'obtention d'une clé secrète hybride **caractérisé en ce qu'**il comprend :
- une première étape (201) d'obtention d'une première clé secrète (302), en utilisant une technologie d'échange de clés secrètes (301) robuste aux attaques quantiques,
- une deuxième étape (202) d'obtention d'une deuxième clé secrète (305) dans un espace chiffré par la première clé secrète, en utilisant une technologie (304) d'échange de clés secrètes autre que celle utilisée dans la première étape (201),
la clé secrète hybride correspondant à la deuxième clé secrète.

2. Procédé d'obtention d'une clé secrète hybride selon la revendication 1, dans lequel le renouvellement de la clé secrète se fait en exécutant de nouveau la deuxième étape (202) seulement.

3. Procédé d'obtention d'une clé secrète hybride selon l'une des revendications précédentes, dans lequel la technologie robuste aux attaques quantiques utilisée lors de la première étape (201) est choisie parmi un ensemble de technologies d'échange de clés secrètes comprenant :
- une distribution de clé (603) par courrier sécurisé,
- un échange de clé (703) par PHYSec,
- un échange de clé (503) par une méthode post-quantique,
- une injection de clé (403) quantique QKD.

4. Procédé d'obtention d'une clé secrète hybride selon l'une des revendications précédentes, dans lequel la technologie d'échange de clés secrètes utilisée lors de la deuxième étape (202) est choisie parmi un ensemble de technologies d'échange de clés secrètes comprenant :
- une technologie d'obtention de clé secrète établie par un échange cryptographique asymétrique (406, 505, 607, 705) ,
- un échange de clé (805) PHYSec.

5. Procédé d'échange de données sécurisé entre deux équipements, ledit procédé d'échange de données sécurisé étant **caractérisé en ce qu'**il comprend :
- l'obtention d'une clé secrète hybride (305) par un procédé d'obtention d'une clé secrète hybride selon l'une des revendications 1 à 4,
- une étape (103) de mise en oeuvre d'un tunnel VPN chiffré (306) entre les deux équipements pour l'échange de données sécurisé, ledit tunnel VPN étant chiffré avec ladite clé secrète hybride (305).

6. Procédé d'échange de données sécurisé entre deux équipements selon la revendication 5, dans lequel une pluralité de clés secrètes hybrides sont générées en itérant la deuxième étape (202) du procédé d'obtention d'une clé secrète hybride pour mettre en oeuvre respectivement une pluralité de tunnels VPN chiffrés.

7. Système comprenant deux équipements (401, 402) reliés par une liaison de données, lesdits équipements comprenant des moyens configurés pour mettre en oeuvre ensemble un procédé d'échange de données sécurisé selon l'une des revendications 5 à 6.

8. Produit programme d'ordinateur comprenant des instructions de code de programme, permettant à deux moyens de calcul numériques de mettre en oeuvre ensemble un procédé d'obtention d'une clé secrète hybride selon l'une des revendications 1 à 4 ou un procédé d'échange de données sécurisé selon l'une des revendications 5 à 6.

9. Support d'enregistrement lisible par un ordinateur sur lequel est enregistré un produit programme d'ordinateur selon la revendication 8.
